# EUROPÄISCHE PATENTSCHRIFT

(11) **EP 3 624 211 B1**
(45) Veröffentlichungstag und Bekanntmachung des Hinweises auf die Patenterteilung: **06.03.2024**
(21) Anmeldenummer: 18194885.2
(22) Anmeldetag: 17.09.2018
(51) Int. Cl.: H01M 50/50, H01M 50/244, H01M 50/247, H01M 50/256

(54) **AKKUPACK-KOPPLUNGSSYSTEM**
BATTERY PACK COUPLING SYSTEM
SYSTÈME D'ACCOUPLEMENT DE BLOCS D'ACCUMULATEUR

(43) Veröffentlichungstag der Anmeldung: 18.03.2020
(73) Patentinhaber: Andreas Stihl AG & Co. KG, 71336 Waiblingen (DE)
(72) Erfinder: Herrmann, Markus, 70736 Fellbach (DE); Nordmann, Alexander, 70437 Stuttgart (DE); Redl, Markus, 6342 Niederndorf (AT); Kolb, Joachim, 71638 Ludwigsburg (DE); Duregger, Georg, 6342 Niederndorf (AT)
(74) Vertreter: Patentanwälte Ruff, Wilhelm, Beier, Dauster & Partner mbB

(56) Entgegenhaltungen:
- EP-A1- 2 819 207
- EP-A1- 3 309 862
- WO-A1-2013/139371
- WO-A1-2018/007111

## Beschreibung

Die Erfindung bezieht sich auf ein Akkupack-Kopplungssystem zur mechanischen Kopplung eines Akkupacks wahlweise mit einer Rückentragvorrichtung oder einem handgeführten Elektrogerät.

Bei dem Akkupack kann es sich insbesondere um einen solchen handeln, der zur elektrischen Energieversorgung handgeführter Elektrogeräte dient, insbesondere elektrisch angetriebener Garten- und/oder Forstbearbeitungsgeräte. Unter handgeführten Elektrogeräten sind vorliegend vor allem Elektrogeräte zu verstehen, die handgetragen oder bodengeführt sind, insbesondere solche, die der Garten- und/oder Forstbearbeitung dienen, wie Motorsägen, Heckenscheren, Laubblasgeräte, Kehrgeräte, Rasenmäher und Vertikutierer, um nur stellvertretend einige Anwendungsbeispiele zu nennen. Der Akkupack ist mittels des Akkupack-Kopplungssystems dafür geeignet, mechanisch und/oder elektrisch wahlweise mit der Rückentragvorrichtung oder dem Elektrogerät gekoppelt zu werden.

Bezüglich der Lageorientierung der genannten Komponenten wird vorliegend, soweit nichts anderes gesagt, auf die Orientierung der Rückentragvorrichtung, wenn sie sich auf dem Rücken eines Benutzers befindet, bzw. auf die Orientierung des Akkupacks in der Festhaltestellung bzw. in der Traglage Bezug genommen, wie sie z.B. vorliegt, wenn der Benutzer die Rückentragvorrichtung mit dem Akkupack auf dem Rücken trägt. Die Offenlegungsschrift EP 2 819 207 A1 offenbart ein Akkupack-Kopplungssystem der eingangs genannten Art. Das dortige System weist am Akkupack eine einzige mechanische Schnittstelle in Form von im unteren Seitenbereich angeordneten Rastvorsprüngen auf, mit denen er mechanisch durch eine jeweilige Rast-/Schnappverbindung wahlweise an die Rückentragvorrichtung oder das Elektrogerät angekoppelt und in einer entsprechenden Festhaltestellung gehalten werden kann, wozu dort jeweils korrespondierende Gegenrastvorsprünge vorgesehen sind. Der Akkupack kann an eine als Schwenkachse fungierende oberseitige Randkante einer Tragbasis der Rückentragvorrichtung unter Belassung einer gewissen Schwenkbeweglichkeit angedockt werden, wodurch er von der Andockstellung in die Festhaltestellung an der Tragbasis eingeschwenkt werden kann. Ein Griff ist an der Unterseite des Akkupacks angeordnet, d.h. an dessen in der Festhaltestellung, d.h. in einer Traglage auf dem Rücken eines Benutzers, unteren Seite. Der Akkupack weist eine erste elektrische Koppelschnittstelle für die Energieversorgung des Elektrogerätes und eine davon verschiedene zweite elektrische Koppelschnittstelle zum elektrischen Laden des Akkupacks auf. Die Rückentragvorrichtung und das Elektrogerät weisen jeweils eine mit der ersten elektrischen Koppelschnittstelle des Akkupacks koppelbare, feststehende elektrische Anschlussschnittstelle auf, wobei die elektrische Kontaktierung automatisch durch das Verbringen des Akkupacks in seine jeweilige Festhaltestellung an der Rückentragvorrichtung bzw. am Elektrogerät erfolgt. Von der feststehenden elektrischen Anschlussschnittstelle der Rückentragvorrichtung führt eine flexible Anschlussleitung zum Anschließen eines anzutreibenden Elektrogerätes ab.

Die Offenlegungsschrift WO 2018/007111 A1 offenbart ein Akkupack-Kopplungssystem der eingangs genannten Art, wobei der dortige Akkupack eine einzige mechanische Koppelschnittstelle zur lösbaren mechanischen Kopplung wahlweise mit einer korrespondierenden mechanischen Koppelschnittstelle an der Rückentragvorrichtung oder mit einer korrespondierenden mechanischen Koppelschnittstelle an dem Elektrogerät aufweist. Speziell besteht diese Koppelschnittstelle am Akkupack aus Hakenelementen, die an einem Außengehäuse des Akkupacks in einem oberen Seitenbereich an einer Frontseite gebildet sind. Das Elektrogerät und die Rückentragvorrichtung weisen dazu korrespondierende, gleichartige Hakenelemente als mit der Koppelschnittstelle am Ackupack jeweils zusammenwirkende mechanische Koppelschnittstelle auf.

In der Offenlegungsschrift WO 2013/139371 A1 ist ein Akkupack-Kopplungssystem zur mechanischen Kopplung eines Akkupacks mit einer Rückentragvorrichtung offenbart, wobei dieses Kopplungssystem eine mechanische Rückentrag-Koppelschnittstelle am Akkupack beinhaltet, die aus mehreren mechanischen Koppelelementen besteht, die an einer Gehäusefrontseite des Akkupacks ausgebildet sind und ein mittiges unteres Hakenelement, zwei seitliche obere Hakenelemente sowie obere und untere Passvorsprünge umfassen.

Die Offenlegungsschrift EP 3 309 862 A1 offenbart ein Akkupack-Kopplungssystem zur lösbaren mechanischen Kopplung eines Akkupacks mit einer Rückentragvorrichtung unter Verwendung von Gurtbefestigungselementen und zur elektrischen Kopplung des Akkupacks mit einer elektrischen Arbeitsmaschine unter Verwendung eines Verbindungskabels, das von einem an einem Batterieaufnahmegehäuse der Rückentragvorrichtung angeordneten Kabelanschluss abführt, der andererseits elektrisch mit dem an der Rückentragvorrichtung gehaltenen Akkupack verbunden ist.

Der Erfindung liegt als technisches Problem die Bereitstellung eines Akkupack-Kopplungssystems der eingangs genannten Art zugrunde, das hinsichtlich der mechanischen und/oder elektrischen Kopplung von Akkupack einerseits und Rückentragvorrichtung bzw. Elektrogerät andererseits Vorteile gegenüber dem oben erwähnten Stand der Technik bietet.

Die Erfindung löst dieses Problem durch die Bereitstellung eines Akkupack-Kopplungssystems mit den Merkmalen des Anspruchs 1. Vorteilhafte Weiterbildungen der Erfindung sind in den Unteransprüchen angegeben, deren Inhalt hiermit durch Verweis zum Bestandteil der Beschreibung gemacht wird.

Gemäß einem Aspekt der Erfindung weist das Akkupack-Kopplungssystem am Akkupack zwei unterschiedliche mechanische Koppelschnittstellen auf, eine Rücktrag-Koppelschnittstelle zur lösbaren mechanischen Kopplung des Akkupacks mit der Rückentragvorrichtung bzw. genauer gesagt mit einer korrespondierenden mechanischen Akkupack-Rückentrag-Koppelschnittstelle an der Rückentragvorrichtung, und eine Gerät-Koppelschnittstelle zur lösbaren mechanischen Kopplung des Akkupacks mit dem Elektrogerät bzw. genauer gesagt mit einer korrespondierenden mechanischen Akkupack-Gerät-Koppelschnittstelle an dem Elektrogerät. Diese Maßnahme hat den Vorteil, dass die beiden Schnittstellen jeweils spezifisch auf die Anforderungen der mechanischen Kopplung des Akkupacks mit der Rückentragvorrichtung bzw. mit dem Elektrogerät ausgelegt sein können, ohne diesbezüglich Kompromisse eingehen zu müssen, wie dies bei Verwendung nur einer einzigen mechanischen Koppelschnittstelle am Akkupack für beide Kopplungsmöglichkeiten der Fall wäre. Diese besagten Anforderungen können durchaus stark unterschiedlich sein, z.B. ist die Kopplung des Akkupacks an das Elektrogerät oftmals relativ starken Erschütterungen ausgesetzt, wie sie u.a. bei einem bodenfahrenden Elektrogerät, wie einem Rasenmäher, typischerweise auftreten. Derartigen Erschütterungen treten bei der auf dem Rücken eines Benutzers getragenen Rückentragvorrichtung normalerweise nicht auf. Die Kopplung des Akkupacks an die Rückentragvorrichtung braucht daher in den meisten Anwendungsfällen nur auf eine verglichen mit der Kopplung des Akkupacks an das Elektrogerät geringere mechanische Stabilität ausgelegt werden, mit entsprechenden Einsparungen an Fertigungsaufwand. Die Kopplung des Akkupacks an das Elektrogerät kann je nach Bedarf auf ausreichend höhere mechanische Stabilität ausgelegt werden.

In einer Weiterbildung der Erfindung umfasst die mechanische Rückentrag-Koppelschnittstelle des Akkupacks ein Rückentrag-Andockelement am Akkupack, mit dem der Akkupack schwenkbeweglich an der Rückentragvorrichtung angedockt werden kann, und ein Rückentrag-Festhalteelement am Akkupack zum Festhalten des Akkupacks an der Rückentragvorrichtung. Dabei ist das Rückentrag-Andockelement an einem unteren Rückseitenbereich des Akkupacks angeordnet, und das Rückentrag-Festhalteelement ist an einem oberen Rückseitenbereich des Akkupacks angeordnet. Dies ergibt eine vorteilhafte Handhabungs- und Stabilitätscharakteristik für das Ankoppeln des Akkupacks an die Rückentragvorrichtung. Der Akkupack kann hierfür zunächst mit seinem unteren Rückseitenbereich an die Rückentragvorrichtung angedockt und dann in seine Festhaltestellung geschwenkt werden, bei der es sich meist um eine stehende, etwa vertikale Lage des Akkupacks handelt, wobei die zugehörige Schwenkachse vorteilhafterweise entsprechend im unteren Rückseitenbereich des Akkupacks oder jedenfalls in der Nähe dieses unteren Rückseitenbereichs liegt. Der Benutzer kann dadurch das Ankoppeln des Akkupacks an der Rückentragvorrichtung in der Regel problemlos einhändig vornehmen, d.h. ohne eine zweite Hand zu Hilfe nehmen zu müssen. Gleiches gilt für das Abnehmen des Akkupacks. Günstig ist es hierbei, wenn ein Griff des Akkupacks an dessen Oberseitenbereich vorgesehen ist.

In einer Ausgestaltung der Erfindung ist das Rückentrag-Andockelement des Akkupacks speziell an einem unteren rückseitigen Eckbereich des Akkupacks angeordnet. Diese Maßnahme ist für die Erzielung eines günstigen Andockverhaltens und einer günstigen Lage der Schwenkachse zum Verschwenken des Akkupacks von seiner Andockstellung an der Rückentragvorrichtung in seine Festhaltestellung an der Rückentragvorrichtung für typische Anwendungen von Vorteil.

In einer Ausgestaltung der Erfindung weist das Rückentrag-Andockelement des Akkupacks ein Rückentrag-Drahtbügelelement oder ein Rückentrag-Bügelaufnahmeelement am Akkupack auf, und das Akkupack-Kopplungssystem beinhaltet die korrespondierende mechanische Akkupack-Rückentrag-Koppelschnittstelle an der Rückentragvorrichtung. Dabei weist die mechanische Akkupack-Rückentrag-Koppelschnittstelle der Rückentragvorrichtung ein mit dem Rückentrag-Drahtbügelelement des Akkupacks schwenkbeweglich zusammenwirkendes Rückentrag-Bügelaufnahmeelement oder ein mit dem Rückentrag-Bügelaufnahmeelement des Akkupacks schwenkbeweglich zusammenwirkendes Rückentrag-Drahtbügelelement auf. Dies stellt eine hinsichtlich Stabilität und Schwenkbeweglichkeit sowie geringem Fertigungsaufwand vorteilhafte Realisierung der Mittel zum Andocken des Akkupacks an der Rückentragvorrichtung dar.

In einer Ausgestaltung der Erfindung beinhaltet das Rückentrag-Festhalteelement des Akkupacks ein Rückentrag-Rastelement am Akkupack, und das Akkupack- Kopplungssystem umfasst die korrespondierende Akkupack-Rückentrag-Koppelschnittstelle an der Rückentragvorrichtung, wobei die mechanische Akkupack-Rückentrag-Koppelschnittstelle der Rückentragvorrichtung ein mit dem Rückentrag-Rastelement des Ackupacks lösbar rastend zusammenwirkendes Rückentrag-Gegenrastelement beinhaltet. Dies realisiert in vorteilhafter Weise eine lösbare Rastverbindung zum Festhalten des Akkupacks an der Rückentragvorrichtung.

In einer Weiterbildung der Erfindung umfasst die mechanische Gerät-Koppelschnittstelle des Akkupacks ein Gerät-Andockelement am Akkupack zum schwenkbeweglichen Andocken des Akkupacks an dem Elektrogerät und ein Gerät-Festhalteelement am Akkupack zum Festhalten des Akkupacks an dem Elektrogerät. Dabei ist das Gerät-Andockelement an einem Unterseitenbereich des Akkupacks angeordnet, und das Gerät-Festhalteelement ist an einem Oberseitenbereich des Akkupacks angeordnet. Dies ergibt eine vorteilhafte Handhabungs- und Stabilitätscharakteristik für das Ankoppeln des Akkupacks an das Elektrogerät. Der Akkupack kann hierfür zunächst unterseitig an das Elektrogerät angedockt werden, wodurch sich für den Benutzer bereits eine gewisse Gewichtsentlastung ergeben kann, und dann in die Festhaltestellung am Elektrogerät geschwenkt werden, die häufig eine etwa horizontale Lage des Akkupacks ist. Da sich die zugehörige Schwenkachse entsprechend im Unterseitenbereich des Akkupacks oder jedenfalls in der Nähe desselben befindet, kann der Benutzer das Verschwenken von der Andockstellung am Elektrogerät in die Festhaltestellung in der Regel einhändig vornehmen, d.h. ohne eine zweite Hand zu Hilfe nehmen zu müssen. Gleiches gilt für das Ausschwenken aus der Festhaltestellung am Elektrogerät in die Andockstellung. Günstig ist es hierbei, wenn ein Griff des Akkupacks an dessen Oberseitenbereich vorgesehen ist.

In einer Ausgestaltung der Erfindung beinhaltet das Gerät-Andockelement des Akkupacks ein Gerät-Bügelaufnahmeelement oder ein Gerät-Drahtbügelelement am Akkupack, und das Akkupack-Kopplungssystem umfasst die korrespondierende mechanische Akkupack-Gerät-Koppelschnittstelle an dem Elektrogerät, wobei die mechanische Akkupack-Gerät-Koppelschnittstelle ein mit dem Gerät-Bügelaufnahmeelement des Ackupacks schwenkbeweglich zusammenwirkendes Gerät-Drahtbügelelement oder ein mit dem Gerät-Drahtbügelelement des Akkupacks schwenkbeweglich zusammenwirkendes Gerät-Bügelaufnahmeelement aufweist. Dies stellt eine hinsichtlich Handhabung, Schwenkbeweglichkeit und geringem Fertigungsaufwand vorteilhafte Realisierung für die Mittel zum Andocken des Akkupacks an das Elektrogerät dar.

In einer weiteren Ausgestaltung der Erfindung beinhaltet das Gerät-Bügelaufnahmeelement einen Aufnahmeprofilkörper mit einem im Querschnitt U-förmigen Bügelaufnahmebereich. Dies stellt eine hinsichtlich geringem Fertigungsaufwand und sicherer, schwenkbeweglicher Aufnahme des korrespondierenden Gerät-Drahtbügelelements vorteilhafte Realisierung für das Gerät-Bügelaufnahmeelement am Akkupack oder am Elektrogerät dar.

In einer Ausgestaltung der Erfindung beinhaltet das Gerät-Festhalteelement des Akkupacks ein Gerät-Rastelement am Akkupack, und das Akkupack-Kopplungssystem umfasst die korrespondierende mechanische Akkupack-Gerät-Koppelschnittstelle an dem Elektrogerät, wobei die mechanische Akkupack-Gerät-Koppelschnittstelle des Elektrogeräts ein mit dem Gerät-Rastelement des Akkupacks lösbar rastend zusammenwirkendes Gerät-Gegenrastelement aufweist. Dies realisiert in vorteilhafter Weise eine lösbare Rastverbindung für das Festhalten des Akkupacks am Elektrogerät.

In einer weiteren Ausgestaltung der Erfindung weist das Akkupack-Kopplungssystem ein nutzerbetätigtes Ausrastbedienelement zum Lösen der Rastverbindung des Gerät-Rastelements des Akkupacks mit dem Gegenrastelement des Elektrogeräts auf, wobei das nutzerbetätigte Ausrastbedienelement in Handbedienreichweite eines oberseitigen Griffs des Akkupacks angeordnet ist. Dies hat den Vorteil, dass der Benutzer das Ausrastbedienelement in der Regel mit der gleichen Hand betätigen kann, mit der er den Akkupack am Griff hält. Dies ermöglicht folglich eine Einhandbedienung für das Ausrasten und eventuell auch das Ausschwenken des Akkupacks aus seiner Festhaltestellung am Elektrogerät in die Andockstellung am Elektrogerät und bei Bedarf auch für das vollständige Abnehmen des Akkupacks vom Elektrogerät aus der Andockstellung heraus.

In einer Ausgestaltung der Erfindung ist ein Abstand des Gerät-Andockelements des Akkupacks zu einer Akkupack-Längsmittenebene geringer als ein Abstand des Gerät-Andockelements zu einer Akkupack-Rückseite. Dies ermöglicht ein relativ längsmittennahes Andocken des Akkupacks an das Elektrogerät, was wiederum beispielsweise für ein platzsparendes Einbringen des Akkupacks in einen Aufnahmeraum des Elektrogeräts und/oder für das Halten des Akkupacks am oder im Elektrogerät von Vorteil sein kann.

In einer Ausgestaltung der Erfindung ist ein Abstand des Gerät-Festhalteelements des Akkupacks zu einer Akkupack-Längsmittenebene geringer als ein Abstand des Gerät-Festhalteelements zu einer Akkupack-Rückseite. Diese Maßnahme kann analog das Aufnehmen des Akkupacks in einem Aufnahmeraum des Elektrogeräts und/oder ein sicheres Festhalten des Akkupacks am bzw. im Elektrogerät begünstigen.

In einer Weiterbildung der Erfindung umfasst das Akkupack-Kopplungssystem eine elektrische Koppelschnittstelle am Akkupack und eine elektrische Anschlussleitung mit einem endseitigen Anschlusssteckerkörper, der mit der elektrischen Koppelschnittstelle des Akkupacks lösbar koppelbar ist. Zudem weist das Akkupack-Kopplungssystem eine zugehörige Steckerbefestigungsmechanik auf, durch die der Anschlusssteckerkörper lösbar an der Rückentragvorrichtung befestigbar ist.

Diese Maßnahme hat den Vorteil, dass die elektrische Anschlussleitung über ihren Anschlusssteckerkörper mit der elektrischen Koppelschnittstelle des Akkupacks unabhängig davon gekoppelt werden kann, ob sich der Akkupack an der Rückentragvorrichtung befindet oder nicht, und dass der Anschlusssteckerkörper der elektrischen Anschlussleitung als elektrische Koppelschnittstelle der Rückentragvorrichtung dienen kann, indem der Anschlusssteckerkörper durch die Steckerbefestigungsmechanik bei Bedarf lösbar an der Rückentragvorrichtung befestigt wird. Eine eigene, feststehende elektrische Koppelschnittstelle ist daher für die Rückentragvorrichtung nicht erforderlich, um den Akkupack elektrisch mit einem Elektrogerät zu verbinden, wenn sich der Akkupack an der Rückentragvorrichtung befindet. Vielmehr kann der gleiche elektrische Anschlussmechanismus dazu verwendet werden, ein Elektrogerät elektrisch an den Akkupack anzuschließen, sowohl im Fall, dass der Akkupack an der Rückentragvorrichtung gehalten ist, als auch im Fall, dass der Akkupack in einer anderen Lage ohne die Rückentragvorrichtung dazu benutzt wird, ein Elektrogerät über die Anschlussleitung mit elektrischer Energie zu speisen.

Vorzugsweise ist die elektrische Koppelschnittstelle des Akkupacks darüber hinaus dafür ausgelegt, direkt mit einer korrespondierenden elektrischen Gerätschnittstelle eines Elektrogerätes gekoppelt zu werden, um das Elektrogerät elektrisch mit dem Akkupack zu verbinden, wenn der Akkupack mechanisch an das Elektrogerät gekoppelt wird.

Optional kann die elektrische Koppelschnittstelle des Akkupacks zusätzlich als Ladeschnittstelle fungieren, um den Akkupack elektrisch wieder aufzuladen. In diesem Fall kann eine zweite, separate elektrische Koppelschnittstelle am Akkupack für diesen Zweck entfallen. Vorzugsweise kann die elektrische Anschlussleitung mit ihrem Anschlusssteckerkörper hierbei zusätzlich als Ladeanschlussverbindung für den Akkupack fungieren. Alternativ kann hierfür eine anderweitige herkömmliche Ladeanschlussleitung verwendet werden.

In einer Weiterbildung der Erfindung ist der Akkupack mechanisch durch eine Andockbewegung und eine anschließende Schwenkbewegung von einer Rückentrag-Andockstellung in eine Rückentrag-Festhaltestellung mit der Rückentragvorrichtung koppelbar, wobei die elektrische Kopplung der elektrischen Koppelschnittstelle des Akkupacks mit dem Anschlusssteckerkörper der elektrischen Anschlussleitung durch das Verschwenken des an die Rückentragvorrichtung angedockten Akkupacks in die Rückentrag-Festhaltestellung automatisch erfolgt, wenn der Anschlusssteckerkörper an der Rückentragvorrichtung befestigt ist.

In einer Weiterbildung der Erfindung weist das Elektrogerät eine mit der elektrischen Koppelschnittstelle am Akkupack koppelbare elektrische Gerätschnittstelle auf, und der Akkupack ist mechanisch durch eine Andockbewegung und eine anschließende Schwenkbewegung in eine Gerät-Festhaltestellung mit dem Elektrogerät koppelbar, wobei die Kopplung der elektrischen Koppelschnittstelle des Akkupacks mit der elektrischen Gerätschnittstelle des Elektrogeräts durch das Verschwenken des an das Elektrogerät angedockten Akkupacks in die Gerät-Festhaltestellung automatisch erfolgt.

In diesen zuletzt genannten Weiterbildungen der Erfindung kann folglich eine separate Handhabung zum elektrischen Koppeln des Akkupacks mit der Rückentragvorrichtung bzw. mit dem Elektrogerät entfallen, die elektrische Kopplung erfolgt hierbei selbsttätig mit dem mechanischen Koppeln des Akkupacks an die Rückentragvorrichtung bzw. das Elektrogerät. Hierbei ist vorteilhaft vorgesehen, dass ein Rückentrag-Schwenkwinkel, um den der Akkupack zwischen seiner Rückentrag-Andockstellung und seiner Rückentrag-Festhaltestellung an der Rückentragvorrichtung verschwenkt wird, mindestens 20° beträgt und/oder ein Gerät-Schwenkwinkel, um den der Akkupack zwischen seiner Gerät-Andockstellung und seiner Gerät-Festhaltestellung am Elektrogerät verschwenkt wird, mindestens 20° beträgt. Dieser relativ große Schwenkwinkel ist hinsichtlich Handhabung, Stabilität und Kraftaufwand für das mechanische Ankoppeln des Akkupacks an die Rückentragvorrichtung bzw. das Elektrogerät vorteilhaft.

In einer Weiterbildung der Erfindung umfasst die Steckerbefestiungsmechanik eine lösbare Rastverbindung des Anschlusssteckerkörpers an einer Tragbasis der Rückentragvorrichtung. Damit kann der Anschlusssteckerkörper in einfacher Weise lösbar an der Rückentragvorrichtung verrastet gehalten werden.

In einer Weiterbildung der Erfindung ist die elektrische Koppelschnittstelle des Akkupacks an einem oberen Rückseitenbereich des Akkupacks angeordnet. Dies stellt eine vorteilhafte Positionierung der elektrischen Koppelschnittstelle am Akkupack dar, sowohl für die Ankopplung des Akkupacks an der Rückentragvorrichtung als auch für seine Ankopplung an das Elektrogerät, insbesondere in Realisierungen, bei denen der Ackupack in einem unteren Bereich an die Rückentragvorrichtung bzw. das Elektrogerät angedockt wird.

Vorteilhafte Ausführungsformen der Erfindung sind in den Zeichnungen dargestellt. Diese und weitere vorteilhafte Ausführungen der Erfindung werden nachfolgend näher erwähnt und beschrieben. Hierbei zeigen:
- Fig. 1: eine perspektivische Rückansicht eines Akkupacks mit zwei unterschiedlichen mechanischen Koppelschnittstellen und einer elektrischen Koppelschnittstelle,
- Fig. 2: eine Draufsicht auf eine Unterseite des Akkupacks,
- Fig. 3: eine Perspektivansicht einer Rückentragvorrichtung für den Akkupack mit zugehöriger mechanischer Akkupack-Rückentrag-Koppelschnittstelle,
- Fig. 4: eine schematische Längsschnittansicht des an die Rückentragvorrichtung angekoppelten Akkupacks in einer herangeschwenkten Rückentrag-Andockstellung,
- Fig. 5: die Ansicht von Fig. 4 mit dem Akkupack in einer Rückentrag-Festhaltestellung,
- Fig. 6: eine perspektivische Draufsicht auf einen Akkupack-Aufnahmebereich eines vom Akkupack gespeisten Elektrogeräts,
- Fig. 7: eine perspektivische Draufsicht auf den Akkupack-Aufnahmebereich des Elektrogeräts mit angekoppeltem Akkupack in Gerät-Andockstellung,
- Fig. 8: eine Längsschnittansicht zu der Perspektivansicht von Fig. 7,
- Fig. 9: die Ansicht von Fig. 8 mit dem Akkupack in Geräte-Festhaltestellung,
- Fig. 10: eine Perspektivansicht einer elektrischen Anschlussleitung mit endseitigem Anschlusssteckerkörper,
- Fig. 11: eine Perspektivansicht des Anschlusssteckerkörpers und
- Fig. 12: die Ansicht von Fig. 11 in einer Halbschnitt-Darstellung.

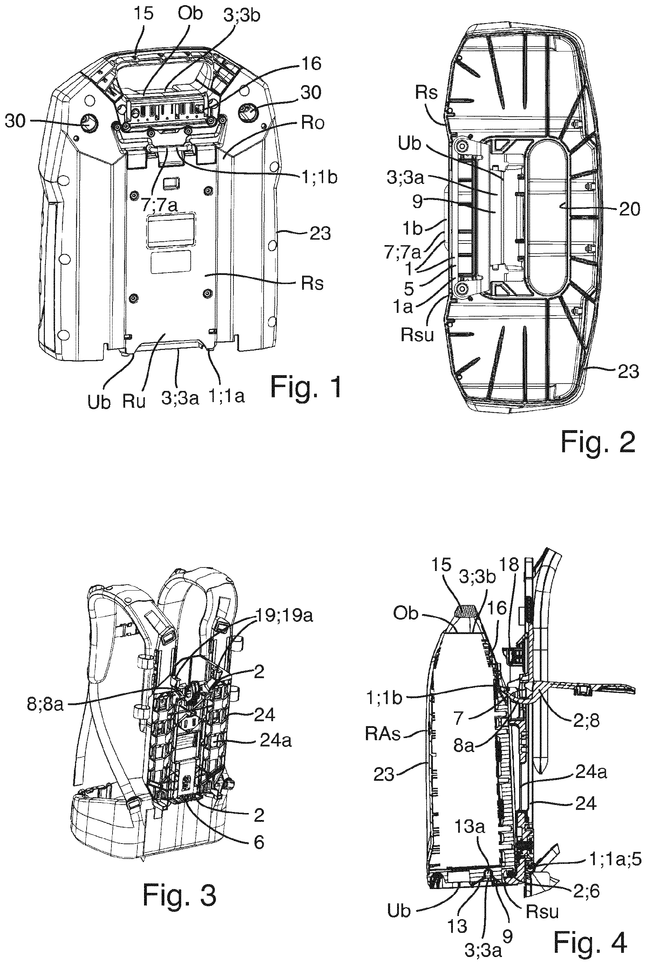

In den verschiedenen Darstellungen der Fig. 1 bis 12 sind vorteilhafte Ausführungen eines Akkupack-Kopplungssystems zur mechanischen und/oder elektrischen Kopplung eines Akkupacks 23 wahlweise mit einer Rückentragvorrichtung 24 oder einem handgeführten Elektrogerät 25, bei dem es sich insbesondere um ein elektrisch angetriebenes Garten- und/oder Forstbearbeitungsgerät handeln kann, veranschaulicht, wobei nachstehend noch weitere vorteilhafte Ausführungen bzw. Varianten eines solchen Ackupack-Kopplungssystems erläutert werden.

Das Akkupack-Kopplungssystem beinhaltet eine mechanische Rückentrag-Koppelschnittstelle 1 am Akkupack 23 zur lösbaren mechanischen Kopplung mit einer korrespondierenden mechanischen Akkupack-Rückentrag-Koppelschnittstelle 2 an der Rückentragvorrichtung 24. Des Weiteren beinhaltet das Akkupack-Kopplungssystem eine von der mechanischen Rückentrag-Koppelschnittstelle 1 verschiedene mechanische Gerät-Koppelschnittstelle 3 am Akkupack 23 zur lösbaren mechanischen Kopplung mit einer korrespondierenden mechanischen Akkupack-Gerät-Koppelschnittstelle 4 an dem Elektrogerät 25.

In entsprechenden Ausführungen umfasst die mechanische Rückentrag-Koppelschnittstelle 1 wie gezeigt ein Rückentrag-Andockelement 1a zum schwenkbeweglichen Andocken des Akkupacks 23 an der Rückentragvorrichtung 24 und ein Rückentrag-Festhalteelement 1b zum Festhalten des Akkupacks 23 an der Rückentragvorrichtung 24. Dabei ist das Rückentrag-Andockelement 1a an einem unteren Rückseitenbereich Ru des Akkupacks 23 angeordnet, und das Rückentrag-Festhalteelement 1b ist an einem oberen Rückseitenbereich Ro des Akkupacks 23 angeordnet, siehe z.B. die Fig. 1 bis 3 und 5. In vorteilhaften Realisierungen ist das Rückentrag-Andockelement 1a speziell an einem unteren rückseitigen Eckbereich Rsu des Akkupacks angeordnet, wie gezeigt. Alternativ kann es mit Abstand vom unteren rückseitigen Eckbereich Rsu des Akkupacks 23 angeordnet sein.

In vorteilhaften Realisierungen weist das Rückentrag-Andockelement 1a ein Rückentrag-Drahtbügelelement 5, wie gezeigt, oder alternativ ein Rückentrag-Bügelaufnahmeelement auf, und das Akkupack-Kopplungssystem umfasst die korrespondierende mechanische Akkupack-Rückentrag-Koppelschnittstelle 2 an der Rückentragvorrichtung 24, wobei die mechanische Akkupack-Rückentrag-Koppelschnittstelle 2 ein mit dem Rückentrag-Drahtbügelelement 5 schwenkbeweglich zusammenwirkendes Rückentrag-Bügelaufnahmeelement 6, siehe z.B. die Fig. 3 bis 5, oder alternativ ein mit dem Rückentrag-Bügelaufnahmeelement des Akkupacks 23 schwenkbeweglich zusammenwirkendes Rückentrag-Drahtbügelelement aufweist.

In entsprechenden Ausführungen beinhaltet das Rückentrag-Festhalteelement 1b des Akkupacks 23 ein Rückentrag-Rastelement 7, und das Akkupack-Kopplungssystem beinhaltet die korrespondierende mechanische Akkupack-Rückentrag-Koppelschnittstelle 2 an der Rückentragvorrichtung 24, wobei die mechanische Akkupack-Rückentrag-Koppelschnittstelle 2 ein mit dem Rückentrag-Rastelement 7 lösbar rastend zusammenwirkendes Rückentrag-Gegenrastelement 8 beinhaltet, wie ebenfalls aus den Fig. 3 bis 5 ersichtlich.

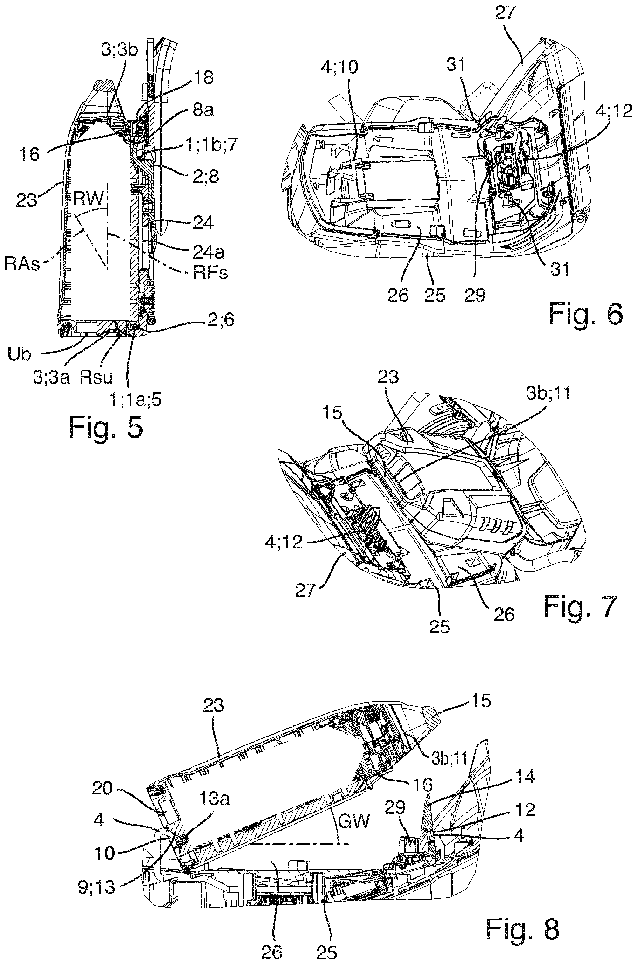

In einer vorteilhaften Realisierung sind wie gezeigt das Rückentrag-Rastelement 7 von einem hinterrastbaren Drahtbügelelement 7a und das Rückentrag-Gegenrastelement 8 durch einen Schwenkhebel 8 mit einem das Drahtbügelelement 7a hintergreifenden Rast-/Festhaltebügel 8a gebildet. Durch Verschwenken des Schwenkhebels 8 von einer in Fig. 4 gezeigten Freigabelage in eine in Fig. 5 gezeigte Festhaltelage wird der Akkupack 23 von einer bereits bis zum Rast-/Festhaltebügel 8a herangeschwenkten Rückentrag-Andockstellung RAs in seine Rückentrag-Festhaltestellung RFs gemäß Fig. 5 an die Rückentragvorrichtung 24 herangeschwenkt, speziell an eine Tragbasis 24a der Rückentragvorrichtung 24.

In entsprechenden Ausführungen beinhaltet die mechanische Gerät-Koppelschnittstelle 3 wie gezeigt ein Gerät-Andockelement 3a am Akkupack 23 zum schwenkbeweglichen Andocken des Akkupacks 23 an dem Elektrogerät 25 und ein Gerät-Festhalteelement 3b am Akkupack 23 zum Festhalten des Akkupacks 23 an dem Elektrogerät 25, wobei das Gerät-Andockelement 3a an einem Unterseitenbereich Ub des Akkupacks 23 angeordnet ist und das Gerät-Festhalteelement 3b an einem Oberseitenbereich Ob des Akkupacks 23 angeordnet ist, siehe z.B. die Fig. 1, 2, 4 und 5.

In entsprechenden Realisierungen beinhaltet das Gerät-Andockelement 3a ein Gerät-Bügelaufnahmeelement 9 am Akkupack, wie gezeigt, oder alternativ ein Gerät-Drahtbügelelement, und das Akkupack-Kopplungssystem umfasst die korrespondierende mechanische Akkupack-Gerät-Koppelschnittstelle 4 an dem Elektrogerät 25, wobei die mechanische Akkupack-Gerät-Koppelschnittstelle 4 ein mit dem Gerät-Bügelaufnahmeelement 9 schwenkbeweglich zusammenwirkendes Gerät-Drahtbügelelement 10 am Elektrogerät 25 oder ein mit dem Gerät-Drahtbügelelement des Akkupacks schwenkbeweglich zusammenwirkendes Gerät-Bügelaufnahmeelement aufweist.

In vorteilhaften Realisierungen beinhaltet das Gerät-Bügelaufnahmeelement 9 wie gezeigt einen Aufnahmeprofilkörper 13 mit einem im Querschnitt U-förmigen Bügelaufnahmebereich 13a, siehe z.B. die Fig. 2, 5, 8 und 9.

In entsprechenden Ausführungen weist das Gerät-Festhalteelement 3b des Akkupacks 23 ein Gerät-Rastelement 11 auf, und das Akkupack-Kopplungssystem umfasst die korrespondierende mechanische Akkupack-Gerät-Koppelschnittstelle 4 an dem Elektrogerät 25, wobei die mechanische Akkupack-Gerät-Koppelschnittstelle 4 ein mit dem Gerät-Rastelement 11 lösbar rastend zusammenwirkendes Gerät-Gegenrastelement 12 aufweist, siehe z.B. die Fig. 7 bis 9.

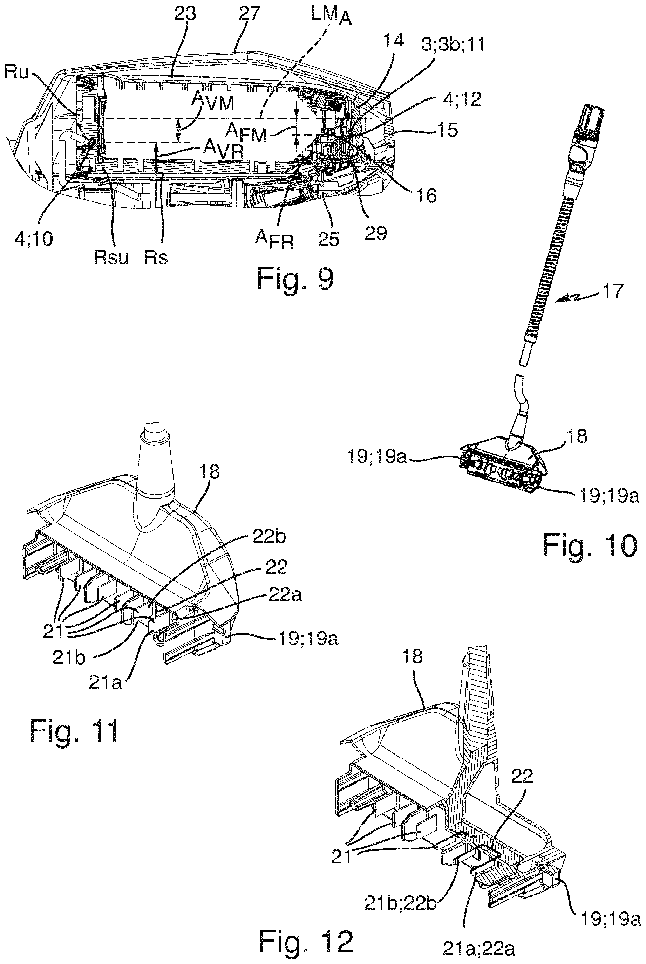

In vorteilhaften Realisierungen beinhaltet das Akkupack-Kopplungssystem wie gezeigt ein nutzerbetätigtes Ausrastbedienelement 14 zum Lösen der Rastverbindung des Gerät-Rastelements 11 des Akkupacks 23 mit dem Gegenrastelement 12 des Elektrogeräts 25, wobei das nutzerbetätigte Ausrastbedienelement 14 in Handbedienreichweite eines oberseitigen Griffs 15 des Akkupacks 23 angeordnet ist, wie insbesondere aus Fig. 9 ersichtlich.

In einer vorteilhaften Realisierung ist das Ausrastbedienelement 14 wie gezeigt durch einen Kipphebel gebildet, der vom Benutzer verschwenkt werden kann. Der Kipphebel kann einteilig mit dem Gerät-Gegenrastelement 12 gebildet sein und ist vorzugsweise durch eine Vorspannfeder in Richtung der Raststellung vorgespannt am Elektrogerät 25 gehalten. In einer vorteilhaften Ausführung ist der Kipphebel, wie z.B. aus Fig. 8 ersichtlich, mit einer Anlaufschräge versehen, durch die er vom Akkupack 23 bei dessen Einschwenken von einer in den Fig. 7 und 8 gezeigten Gerät-Andockstellung GAs in eine in Fig. 9 gezeigte Gerät-Festhaltestellung GFs selbsttätig in seine Ausrast- bzw. Freigabestellung verschwenkt werden kann, um dann unter der Wirkung der Vorspannfeder selbsttätig wieder in die Raststellung zurückzukehren, sobald der Akkupack 23 seine Gerät-Festhaltestellung GFs erreicht hat.

Wie insbesondere aus Fig. 9 ersichtlich, ist in entsprechenden Ausführungen ein Abstand A_{VM} des Gerät-Andockelements 3a des Akkupacks 23 zu einer Akkupack-Längsmittenebene LM_{A} geringer als ein Abstand A_{VR} des Gerät-Andockelements 3a zu einer Akkupack-Rückseite Rs, und/oder ein Abstand A_{FM} des Gerät-Festhalteelements 3b des Akkupacks 23 zu einer Akkupack-Längsmittenebene LM_{A} ist geringer als Abstand A_{FR} des Gerät-Festhalteelements 3b zur Akkupack-Rückseite Rₛ. Dadurch lässt sich der Akkupack 23 mechanisch sehr stabil und gut unterstützt im bzw. am Elektrogerät 25 halten.

In einer vorteilhaften Realisierung weist der Akkupack eine Positionierhilfe 30 auf, die ein zuverlässiges Erreichen seiner Festhaltestellung an der Rückentragvorrichtung 24 und/oder am Elektrogerät 25 unterstützt. Im gezeigten Beispiel beinhaltet die Positionierhilfe 30 mehrere Positionierausnehmungen, in die passende Positioniervorsprünge an der Rückentragvorrichtung 24 und/oder am Elektrogerät 25 eingreifen können. Im gezeigten Beispiel besitzt hierzu das Elektrogerät derartige Positioniervorsprünge als korrespondierende Positionierhilfe 31.

Im gezeigten Ausführungsbeispiel besitzt das Elektrogerät 25 einen Akkupack-Aufnahmeraum 26, in welchem der Akkupack 23 zur mechanischen und elektrischen Kopplung mit dem Elektrogerät 25 aufgenommen werden kann und der durch eine schwenkbeweglich angeordnete Gerätehaube 27 abgedeckt werden kann.

In entsprechenden Ausführungsformen umfasst das Akkupack-Kopplungssystem eine elektrische Koppelschnittstelle 16 am Akkupack 23 sowie eine elektrische Anschlussleitung 17 mit einem endseitigen Anschlusssteckerkörper 18, der mit der elektrischen Koppelschnittstelle 16 lösbar koppelbar ist. Des Weiteren beinhaltet das Akkupack-Kopplungssystem in diesem Fall eine Steckerbefestigungsmechanik 19, durch die der Anschlusssteckerkörper 18 lösbar an der Rückentragvorrichtung 24 befestigbar ist.

In vorteilhaften Ausführungen ist der Akkupack 23 mechanisch durch eine Andockbewegung und eine anschließende Schwenkbewegung von einer Rückentrag-Andockstellung RAs in die Rückentrag-Festhaltestellung RFs mit der Rückentragvorrichtung 24 koppelbar, wie in Fig. 5 angedeutet, wobei die elektrische Kopplung der elektrischen Koppelschnittstelle 16 mit dem Anschlusssteckerkörper 18 durch das Verschwenken des an die Rückentragvorrichtung 24 angedockten Akkupacks 23 in die Rückentrag-Festhaltestellung RFs erfolgt, wenn der Anschlusssteckerkörper 18 an der Rückentragvorrichtung 24 befestigt ist.

In vorteilhaften Ausführungen weist das Elektrogerät 25 eine mit der elektrischen Koppelschnittstelle 16 am Akkupack 23 koppelbare elektrische Geräteschnittstelle 29 auf, und der Akkupack 23 ist mechanisch durch eine Andockbewegung und eine anschließende Schwenkbewegung von der Geräte-Andockstellung GAs in die Gerät-Festhaltestellung GFs mit dem Elektrogerät 25 koppelbar, wie aus den Fig. 8 und 9 ersichtlich, wobei die Kopplung der elektrischen Koppelschnittstelle 16 des Akkupacks mit der elektrischen Gerätschnittstelle 29 des Elektrogeräts 25 selbsttätig durch das Verschwenken des an das Elektrogerät 25 angedockten Akkupacks 23 in die Gerät-Festhaltestellung GFs erfolgt.

Dabei beträgt ein Rückentrag-Schwenkwinkel RW des Akkupacks 23 zwischen der Rückentrag-Andockstellung RAs und der Rückentrag-Festhaltestellung RFs mindestens 20°, und/oder ein Gerät-Schwenkwinkel GW des Akkupacks 23 zwischen der Gerät-Andockstellung GAs und der Gerät-Festhaltestellung GFs beträgt mindestens 20°. Dieser relativ große Schwenkwinkel RW bzw. GW erleichtert das mechanische Ankoppeln und das dadurch gleichzeitig selbsttätig bewirkte elektrische Ankoppeln des Akkupacks 23 an die Rückentragvorrichtung 24 bzw. an das Elektrogerät 25.

In vorteilhaften Ausführungen umfasst die Steckerbefestigungsmechanik 19 eine lösbare Rastverbindung 19a des Anschlusssteckerkörpers 18 an der Tragbasis 24a der Rückentragvorrichtung 24, siehe die Fig. 3 und 10 bis 12, wie beispielsweise eine oder mehrere Rastnassen am Anschlusssteckerkörper 18 und eine oder mehrere korrespondierende Rastaufnahmen an der Tragbasis 24a.

In vorteilhaften Realisierungen ist die elektrische Koppelschnittstelle 16 des Akkupacks 23 wie gezeigt am oberen Rückseitenbereich Ro des Akkupacks 23 angeordnet. Dies begünstigt das elektrische Ankoppeln des Akkupacks 23 wahlweise direkt am Elektrogerät 25 oder am an der Rückentragvorrichtung 24 montierten Anschlusssteckerkörper 18.

Zur erleichterten Handhabung des Akkupacks 23 beim Ankoppeln an die Rückentragvorrichtung 24 und insbesondere beim Ankoppeln an das Elektrogerät 25 ist optional eine Griffmulde 20 im Unterseitenbereich Ub des Akkupacks 23 und damit dem Griff 15 an der Akkupack-Oberseite Ob gegenüberliegend vorgesehen, siehe insbesondere die Fig. 2 und 8. Dadurch kann der Benutzer den Akkupack 23 bei Bedarf bequem mit zwei Händen halten und handhaben.

In vorteilhaften Ausführungen beinhaltet der Anschlusssteckerkörper 18, wie in den Fig. 10 bis 12 gezeigt, eine Mehrzahl von elektrischen Kontaktzungen 21, von denen wenigstens zwei benachbarte Kontaktzungen 21a, 21b durch U-Flanken 22a, 22b eines einteiligen U-förmigen elektrischen Kontaktelements 22 gebildet und auf diese Weise elektrisch kurzgeschlossen sind. Diese Maßnahme kann funktionelle und fertigungstechnische Vorteile bieten. Bei Verwendung eines derartigen U-förmigen Kontaktelements 22, z.B. als U-Kontaktblech, ist nur ein einziger Schweiß- und Einpressvorgang für das betreffende Kontaktpaar erforderlich. Zudem lässt sich eine bessere Positioniergenauigkeit für die beiden Kontaktzungen 21a, 21b über den gemeinsamen U-förmigen Körper im Vergleich zur Verwendung zweier einzelner Kontaktzungen erzielen. In funktioneller Hinsicht lassen sich über die elektrisch kurzschließende U-Verbindung dieser Kontaktzungen 21a, 21b Stromstärkeunterschiede automatisch ausgleichen, und der Kontaktverschleiß bleibt gleich oder jedenfalls gleichmäßiger, auch im Fall dass im Lauf der Gebrauchsdauer unterschiedlich abgenutzte Paarungen von Kontaktzungen einerseits und Zungenaufnahmen andererseits vorliegen.

Wie die gezeigten und die weiteren oben erläuterten Ausführungsbeispiele deutlich machen, stellt die Erfindung ein Akkupack-Kopplungssystem zur Verfügung, durch das ein Akkupack in sehr vorteilhafter Weise und mit vorteilhaften funktionellen Eigenschaften mechanisch und/oder elektrisch wahlweise mit einer Rückentragvorrichtung oder einem handgeführten Elektrogerät gekoppelt werden kann.

## Patentansprüche

1. Akkupack-Kopplungssystem zur mechanischen Kopplung eines Akkupacks (23) wahlweise mit einer Rückentragvorrichtung (24) oder einem handgeführten Elektrogerät (25), insbesondere einem elektrisch angetriebenen Garten- oder Forstbearbeitungsgerät, mit
- einer mechanischen Rückentrag-Koppelschnittstelle (1) am Akkupack zur lösbaren mechanischen Kopplung mit einer korrespondierenden mechanischen Akkupack-Rückentrag-Koppelschnittstelle (2) an der Rückentragvorrichtung (24), **gekennzeichnet durch**
- eine von der mechanischen Rückentrag-Koppelschnittstelle (1) verschiedene mechanische Gerät-Koppelschnittstelle (3) am Akkupack (23) zur lösbaren mechanischen Kopplung mit einer korrespondierenden mechanischen Akkupack-Gerät-Koppelschnittstelle (4) an dem Elektrogerät (25).

2. Akkupack-Kopplungssystem nach Anspruch 1, weiter **dadurch gekennzeichnet, dass** die mechanische Rückentrag-Koppelschnittstelle (1) ein Rückentrag-Andockelement (1a) zum schwenkbeweglichen Andocken des Akkupacks an der Rückentragvorrichtung (24) und ein Rückentrag-Festhalteelement (1b) zum Festhalten des Akkupacks an der Rückentragvorrichtung aufweist, wobei das Rückentrag-Andockelement (1a) an einem unteren Rückseitenbereich (Ru) des Akkupacks angeordnet ist und das Rückentrag-Festhalteelement (1b) an einem oberen Rückseitenbereich (Ro) des Akkupacks angeordnet ist.

3. Akkupack-Kopplungssystem nach Anspruch 2, weiter **dadurch gekennzeichnet, dass** das Rückentrag-Andockelement (1a) an einem unteren rückseitigen Eckbereich (Rsu) des Akkupacks angeordnet ist.

4. Akkupack-Kopplungssystem nach Anspruch 2 oder 3, weiter **dadurch gekennzeichnet, dass** das Rückentrag-Andockelement (1a) ein Rückentrag-Drahtbügelelement (5) oder ein Rückentrag-Bügelaufnahmeelement aufweist und das Akkupack-Kopplungssystem die korrespondierende mechanische Akkupack-Rückentrag-Koppelschnittstelle (2) an der Rückentragvorrichtung beinhaltet und die mechanische Akkupack-Rückentrag-Koppelschnittstelle (2) ein mit dem Rückentrag-Drahtbügelelement (5) schwenkbeweglich zusammenwirkendes Rückentrag-Bügelaufnahmeelement (6) oder ein mit dem Rückentrag-Bügelaufnahmeelement schwenkbeweglich zusammenwirkendes Rückentrag-Drahtbügelelement aufweist.

5. Akkupack-Kopplungssystem nach einem der Ansprüche 2 bis 4, weiter **dadurch gekennzeichnet, dass** das Rückentrag-Festhalteelement (1b) ein Rückentrag-Rastelement (7) beinhaltet und das Akkupack-Kopplungssystem die korrespondierende mechanische Akkupack-Rückentrag-Koppelschnittstelle (2) an der Rückentragvorrichtung beinhaltet und die mechanische Akkupack-Rückentrag-Koppelschnittstelle (2) ein mit dem Rückentrag-Rastelement (7) lösbar rastend zusammenwirkendes Rückentrag-Gegenrastelement (8) beinhaltet.

6. Akkupack-Kopplungssystem nach einem der Ansprüche 1 bis 5, weiter **dadurch gekennzeichnet, dass** die mechanische Gerät-Koppelschnittstelle (3) ein Gerät-Andockelement (3a) zum schwenkbeweglichen Andocken des Akkupacks an dem Elektrogerät und ein Gerät-Festhalteelement (3b) zum Festhalten des Ackupacks an dem Elektrogerät aufweist, wobei das Gerät-Andockelement (3a) an einem Unterseitenbereich (Ub) des Akkupacks angeordnet ist und das Gerät-Festhalteelement (3b) an einem Oberseitenbereich (Ob) des Akkupacks angeordnet ist.

7. Akkupack-Kopplungssystem nach Anspruch 6, weiter **dadurch gekennzeichnet, dass** das Gerät-Andockelement (3a) ein Gerät-Bügelaufnahmeelement (9) oder ein Gerät-Drahtbügelelement aufweist und das Akkupack-Kopplungssystem die korrespondierende mechanische Akkupack-Gerät-Koppelschnittstelle (4) an dem Elektrogerät beinhaltet und die mechanische Akkupack-Gerät-Koppelschnittstelle (4) ein mit dem Gerät-Bügelaufnahmeelement (9) schwenkbeweglich zusammenwirkendes Gerät-Drahtbügelelement (10) oder ein mit dem Gerät-Drahtbügelelement schwenkbeweglich zusammenwirkendes Gerät-Bügelaufnahmeelement aufweist.

8. Akkupack-Kopplungssystem nach Anspruch 7, weiter **dadurch gekennzeichnet, dass** das Gerät-Bügelaufnahmeelement (9) einen Aufnahmeprofilkörper (13) mit einem im Querschnitt U-förmigen Bügelaufnahmebereich (13a) beinhaltet.

9. Akkupack-Kopplungssystem nach einem der Ansprüche 6 bis 8, weiter **dadurch gekennzeichnet, dass** das Gerät-Festhalteelement (3b) ein Gerät-Rastelement (11) und das Akkupack-Kopplungssystem die korrespondierende mechanische Akkupack-Gerät-Koppelschnittstelle (4) an dem Elektrogerät beinhaltet und die mechanische Akkupack-Gerät-Koppelschnittstelle (4) ein mit dem Gerät-Rastelement (11) lösbar rastend zusammenwirkendes Gerät-Gegenrastelement (12) beinhaltet.

10. Akkupack-Kopplungssystem nach Anspruch 9, weiter **gekennzeichnet durch** ein nutzerbetätigtes Ausrastbedienelement (14) zum Lösen der Rastverbindung des Gerät-Rastelements (11) des Akkupacks mit dem Gegenrastelement (12) des Elektrogeräts, wobei das nutzerbetätigte Ausrastbedienelement (14) in Handbedienreichweite eines oberseitigen Griffs (15) des Akkupacks angeordnet ist.

11. Akkupack-Kopplungssystem nach einem der Ansprüche 6 bis 10, weiter **dadurch gekennzeichnet, dass**
- ein Abstand (A_{VM}) des Gerät-Andockelements (3a) zu einer Akkupack-Längsmittenebene (LM_{A}) geringer ist als ein Abstand (A_{VR}) des Gerät-Andockelements (3a) zu einer Akkupack-Rückseite (Rs) und/oder
- ein Abstand (A_{FM}) des Gerät-Festhalteelements (3b) zu einer Akkupack-Längsmittenebene (LM_{A}) geringer ist als ein Abstand (A_{FR}) des Gerät-Festhalteelements (3b) zu einer Akkupack-Rückseite (Rs).

12. Akkupack-Kopplungssystem nach einem der Ansprüche 1 bis 11, weiter **dadurch gekennzeichnet, dass** es zur elektrischen Kopplung des Akkupacks (23) wahlweise mit der Rückentragvorrichtung (24) oder dem handgeführten Elektrogerät (25) eingerichtet ist und dazu folgendes aufweist:
- eine elektrische Koppelschnittstelle (16) am Akkupack (23),
- eine elektrische Anschlussleitung (17) mit einem endseitigen Anschlusssteckerkörper (18), der mit der elektrischen Koppelschnittstelle (16) lösbar koppelbar ist, und
- eine Steckerbefestigungsmechanik (19), durch die der Anschlusssteckerkörper (18) lösbar an der Rückentragvorrichtung (24) befestigbar ist.

13. Akkupack-Kopplungssystem nach Anspruch 12, weiter **dadurch gekennzeichnet, dass**
- der Akkupack (23) mechanisch durch eine Andockbewegung und eine anschließende Schwenkbewegung von einer Rückentrag-Andockstellung (RAs) in eine Rückentrag-Festhaltestellung (RFs) mit der Rückentragvorrichtung (24) koppelbar ist und bei an der Rückentragvorrichtung (24) befestigtem Anschlusssteckerkörper (18) die elektrische Kopplung der elektrischen Koppelschnittstelle (16) mit dem Anschlusssteckerkörper (18) durch das Verschwenken des an die Rückentragvorrichtung (24) angedockten Akkupacks (23) in die Rückentrag-Festhaltestellung erfolgt und/oder
- das Elektrogerät (25) eine mit der elektrischen Koppelschnittstelle (16) am Akkupack (23) koppelbare elektrische Gerätschnittstelle (29) aufweist und der Akkupack (23) mechanisch durch eine Andockbewegung und eine anschließende Schwenkbewegung von einer Gerät-Andockstellung (GAs) in eine Gerät-Festhaltestellung (GFs) mit dem Elektrogerät (25) koppelbar ist und die Kopplung der elektrischen Koppelschnittstelle mit der elektrischen Gerätschnittstelle durch das Verschwenken des an das Elektrogerät (25) angedockten Akkupacks (23) in die Gerät-Festhaltestellung erfolgt,
- wobei ein Rückentrag-Schwenkwinkel (RW) des Akkupacks (23) zwischen der Rückentrag-Andockstellung (RAs) und der Rückentrag-Festhaltestellung (RFs) mindestens 20° beträgt und/oder ein Gerät-Schwenkwinkel (GW) des Ackupacks (23) zwischen der Gerät-Andockstellung (GAs) und der Gerät-Festhaltestellung (GFs) mindestens 20° beträgt.

14. Akkupack-Kopplungssystem nach Anspruch 12 oder 13, weiter **dadurch gekennzeichnet, dass** die Steckerbefestigungsmechanik (19) eine lösbare Rastverbindung (19a) des Anschlusssteckerkörpers (18) an einer Tragbasis (20) der Rückentragvorrichtung (24) umfasst.

15. Akkupack-Kopplungssystem nach einem der Ansprüche 12 bis 14, weiter **dadurch gekennzeichnet, dass** die elektrische Koppelschnittstelle (16) an einem oberen Rückseitenbereich (Ro) des Akkupacks (23) angeordnet ist.

## Claims

1. Battery pack coupling system for mechanically coupling a battery pack (23) selectively to a harness device (24) or to a manually operated electrical device (25), preferably an electrically driven garden or woodland cultivation device, the battery pack coupling system comprising
- a mechanical backpack coupling interface (1) at the battery pack for the releasable mechanical coupling to a corresponding mechanical battery pack-backpack coupling interface (2) at the harness device (24),
**characterized by**
- a mechanical device coupling interface (3) at the battery pack (23), different from the mechanical backpack coupling interface (1), for the releasable mechanical coupling to a corresponding mechanical battery pack-device coupling interface (4) at the electrical device (25).

2. Battery pack coupling system according to Claim 1, further **characterized in that** the mechanical backpack coupling interface (1) comprises a backpack docking element (1a) for the pivotable docking of the battery pack to the harness device (24), and a backpack holding element (1b) for holding the battery pack at the harness device, wherein the backpack docking element (1a) is arranged at a lower rear region (Ru) of the battery pack, and the backpack holding element (1b) is arranged at an upper rear region (Ro) of the battery pack.

3. Battery pack coupling system according to Claim 2, further **characterized in that** the backpack docking element (1a) is arranged at a lower rear corner region (Rsu) of the battery pack.

4. Battery pack coupling system according to Claim 2 or 3, further **characterized in that** the backpack docking element (1a) comprises a backpack wire bracket element (5) or a backpack bracket accepting element, and the battery pack coupling system contains the corresponding mechanical battery pack-backpack coupling interface (2) at the harness device, and the mechanical battery pack-backpack coupling interface (2) comprises a backpack bracket accepting element (6) that works together in a pivoting manner with the backpack wire bracket element (5), or a backpack wire bracket element that works together in a pivoting manner with the backpack bracket accepting element.

5. Battery pack coupling system according to any one of Claims 2 to 4, further **characterized in that** the backpack holding element (1b) contains a backpack latching element (7), and the battery pack coupling system contains the corresponding mechanical battery pack-backpack coupling interface (2) at the harness device, and the mechanical battery pack-backpack coupling interface (2) contains a backpack mating latching element (8) that works together in a releasable latching manner with the backpack latching element (7).

6. Battery pack coupling system according to any one of Claims 1 to 5, further **characterized in that** the mechanical device coupling interface (3) comprises a device docking element (3a) for the pivotable docking of the battery pack to the electrical device, and a device holding element (3b) for holding the battery pack at the electrical device, wherein the device docking element (3a) is arranged at an underside region (Ub) of the battery pack, and the device holding element (3b) is arranged at a topside region (Ob) of the battery pack.

7. Battery pack coupling system according to Claim 6, further **characterized in that** the device docking element (3a) comprises a device bracket accepting element (9) or a device wire bracket element, and the battery pack coupling system contains the corresponding mechanical battery pack-device coupling interface (4) at the electrical device, and the mechanical battery pack-device coupling interface (4) comprises a device wire bracket element (10) that works together in a pivoting manner with the device bracket accepting element (9), or a device bracket accepting element that works together in a pivoting manner with the device wire bracket element.

8. Battery pack coupling system according to Claim 7, further **characterized in that** the device bracket accepting element (9) contains an accepting profile body (13) with a bracket accepting region (13a) having a U-shaped cross-section.

9. Battery pack coupling system according to any one of Claims 6 to 8, further **characterized in that** the device holding element (3b) contains a device latching element (11), and the battery pack coupling system contains the corresponding mechanical battery pack-device coupling interface (4) at the electrical device, and the mechanical battery pack-device coupling interface (4) contains a device mating latching element (12) that works together in a releasable latching manner with the device latching element (11).

10. Battery pack coupling system according to Claim 9, further **characterized by** a user-actuated unlatching operating element (14) for releasing the latching connection of the device latching element (11) of the battery pack to the mating latching element (12) of the electrical device, wherein the user-actuated unlatching operating element (14) is arranged within manual reach of a topside handle (15) of the battery pack.

11. Battery pack coupling system according to any one of Claims 6 to 10, further **characterized in that**
- a distance (A_{VM}) of the device docking element (3a) from a battery pack longitudinal median plane (LM_{A}) is less than a distance (A_{VR}) of the device docking element (3a) from a battery pack rear side (Rs), and/or
- a distance (A_{FM}) of the device holding element (3b) from a battery pack longitudinal median plane (LM_{A}) is less than a distance (A_{FR}) of the device holding element (3b) from a battery pack rear side (Rs).

12. Battery pack coupling system according to any one of Claims 1 to 11, further **characterized in that** it is configured for electrically coupling the battery pack (23) selectively to the harness device (24) or to the manually operated electrical device (25), the battery pack coupling system comprising to this end
- an electrical coupling interface (16) at the battery pack (23),
- an electrical connecting line (17) having at an end a connecting plug body (18) which can be releasably coupled to the electrical coupling interface (16), and
- a plug fastening mechanism (19) by which the connecting plug body (18) can be fastened releasably to the harness device (24).

13. Battery pack coupling system according to Claim 12, further **characterized in that**
- the battery pack (23) can be coupled mechanically to the harness device (24) through a docking movement and a subsequent pivoting movement from a backpack docking position (RAs) into a backpack holding position (RFs), and, when the connecting plug body (18) is fastened at the harness device (24), the electrical coupling of the electrical coupling interface (16) to the connecting plug body (18) takes place through the pivoting of the battery pack (23) that is docked at the harness device (24) into the backpack holding position, and/or
- the electrical device (25) comprises an electrical device interface (29) capable of being coupled to the electrical coupling interface (16) at the battery pack (23), and the battery pack (23) is capable of being coupled mechanically to the electrical device (25) through a docking movement and a subsequent pivoting movement from a device docking position (GAs) into a device holding position (GFs), and the coupling of the electrical coupling interface to the electrical device interface takes place through the pivoting of the battery pack (23) that is docked at the electrical device (25) into the device holding position,
- wherein a backpack pivoting angle (RW) of the battery pack (23) between the backpack docking position (RAs) and the backpack holding position (RFs) is at least 20°, and/or a device pivoting angle (GW) of the battery pack (23) between the device docking position (GAs) and the device holding position (GFs) is at least 20°.

14. Battery pack coupling system according to Claim 12 or 13, further **characterized in that** the plug fastening mechanism (19) comprises a releasable latching connection (19a) of the connecting plug body (18) at a carrier base (20) of the harness device (24).

15. Battery pack coupling system according to any one of Claims 12 to 14, further **characterized in that** the electrical coupling interface (16) is arranged at an upper rear region (Ro) of the battery pack (23).

## Revendications

1. Système d'accouplement de bloc d'accumulateur destiné à l'accouplement mécanique d'un bloc d'accumulateur (23) au choix à un dispositif à dos (24) ou à un appareil électrique à main (25), en particulier un appareil de traitement jardinier ou forestier à commande électrique, comprenant
- une interface mécanique (1) d'accouplement à dos (1) au niveau du bloc d'accumulateur destinée à un accouplement mécanique amovible à une interface mécanique (2) d'accouplement à dos de bloc d'accumulateur correspondante au niveau du dispositif à dos (24), **caractérisé par**
- une interface mécanique (3) d'accouplement d'appareil au niveau du bloc d'accumulateur (23), différente de l'interface mécanique (1) d'accouplement à dos, destinée à un accouplement mécanique amovible à une interface mécanique (4) d'accouplement d'appareil de bloc d'accumulateur correspondante au niveau de l'appareil électrique (25).

2. Système d'accouplement de bloc d'accumulateur selon la revendication 1, **caractérisé en outre en ce que** l'interface mécanique (1) d'accouplement à dos présente un élément d'amarrage à dos (1a) destiné à un amarrage pivotant du bloc d'accumulateur au dispositif à dos (24), et un élément de retenue à dos (1b) destiné à retenir le bloc d'accumulateur sur le dispositif à dos, dans lequel l'élément d'amarrage à dos (1a) est disposé dans une zone de face arrière inférieure (Ru) du bloc d'accumulateur, et l'élément de retenue à dos (1b) est disposé sur une zone de face arrière supérieure (Ro) du bloc d'accumulateur.

3. Système d'accouplement de bloc d'accumulateur selon la revendication 2, **caractérisé en outre en ce que** l'élément d'amarrage à dos (1a) est disposé dans une zone angulaire en face arrière inférieure (Rsu) du bloc d'accumulateur.

4. Système d'accouplement de bloc d'accumulateur selon la revendication 2 ou 3, **caractérisé en outre en ce que** l'élément d'amarrage à dos (1a) présente un élément d'étrier métallique à dos (5) ou un élément de logement d'étrier à dos, et le système d'accouplement de bloc d'accumulateur comporte l'interface mécanique (2) d'accouplement à dos de bloc d'accumulateur correspondante au niveau du dispositif à dos, et l'interface mécanique (2) d'accouplement à dos de bloc d'accumulateur présente un élément de logement d'étrier à dos (6) coopérant en pivotement avec l'élément d'étrier métallique à dos (5) ou un élément d'étrier métallique à dos coopérant en pivotement avec l'élément de logement d'étrier à dos.

5. Système d'accouplement de bloc d'accumulateur selon l'une quelconque des revendications 2 à 4, **caractérisé en outre en ce que** l'élément de retenue à dos (1b) comporte un élément d'enclenchement à dos (7), et le système d'accouplement de bloc d'accumulateur comporte l'interface mécanique (2) d'accouplement à dos de bloc d'accumulateur correspondante, et l'interface mécanique (2) d'accouplement à dos de bloc d'accumulateur comporte un élément d'enclenchement complémentaire à dos (8) coopérant par enclenchement amovible avec l'élément d'enclenchement à dos (7).

6. Système d'accouplement de bloc d'accumulateur selon l'une quelconque des revendications 1 à 5, **caractérisé en outre en ce que** l'interface mécanique d'accouplement d'appareil (3) présente un élément d'amarrage d'appareil (3a) destiné à l'amarrage pivotant du bloc d'accumulateur à l'appareil électrique et un élément de retenue d'appareil (3b) pour retenir le bloc d'accumulateur sur l'appareil électrique, dans lequel l'élément d'amarrage d'appareil (3a) est disposé dans une zone de face inférieure (Ub) du bloc d'accumulateur et l'élément de retenue d'appareil (3b) est disposé dans une zone de face supérieure (Ob) du bloc d'accumulateur.

7. Système d'accouplement de bloc d'accumulateur selon la revendication 6, **caractérisé en outre en ce que** l'élément d'amarrage d'appareil (3a) présente un élément de logement d'étrier d'appareil (9) ou un élément d'étrier métallique d'appareil, et le système d'accouplement de bloc d'accumulateur comporte l'interface mécanique (4) d'accouplement d'appareil de bloc d'accumulateur correspondante au niveau de l'appareil électrique, et l'interface mécanique (4) d'accouplement d'appareil de bloc d'accumulateur présente un élément d'étrier métallique d'appareil (10) coopérant en pivotement avec l'élément de logement d'étrier d'appareil (9) ou un élément de logement d'étrier d'appareil coopérant en pivotement avec l'élément de d'étrier métallique d'appareil.

8. Système d'accouplement de bloc d'accumulateur selon la revendication 7, **caractérisé en outre en ce que** l'élément de logement d'étrier d'appareil (9) comporte un corps profilé de logement (13) pourvu d'une zone de logement d'étrier (13a) à section transversale en forme de U.

9. Système d'accouplement de bloc d'accumulateur selon l'une quelconque des revendications 6 à 8, **caractérisé en outre en ce que** l'élément de retenue d'appareil (3b) comporte un élément d'enclenchement d'appareil (11), et le système d'accouplement de bloc d'accumulateur comporte l'interface mécanique (4) d'accouplement d'appareil de bloc d'accumulateur correspondante au niveau de l'appareil électrique, et l'interface mécanique (4) d'accouplement d'appareil de bloc d'accumulateur comporte un élément d'enclenchement complémentaire d'appareil (12) coopérant par enclenchement amovible avec l'élément d'enclenchement d'appareil (11).

10. Système d'accouplement de bloc d'accumulateur selon la revendication 9, **caractérisé en outre par** un élément de commande de désenclenchement (14) actionné par l'utilisateur pour libérer la connexion par enclenchement de l'élément d'enclenchement d'appareil (11) du bloc d'accumulateur avec l'élément d'enclenchement complémentaire (12) de l'appareil électrique, dans lequel l'élément de commande de désenclenchement (14) actionné par l'utilisateur est disposé à portée de commande manuelle d'une poignée en face supérieure (15) du bloc d'accumulateur.

11. Système d'accouplement de bloc d'accumulateur selon l'une quelconque des revendications 6 à 10, **caractérisé en outre en ce que**
- une distance (A_{VM}) de l'élément d'amarrage d'appareil (3a) à un plan central longitudinal de bloc d'accumulateur (LM_{A}) est inférieure à une distance (A_{VR}) de l'élément d'amarrage d'appareil (3a) à une face arrière de bloc d'accumulateur (Rs), et/ou
- une distance (A_{FM}) de l'élément de retenue d'appareil (3b) à un plan central longitudinal de bloc d'accumulateur (LM_{A}) est inférieure à une distance (A_{FR}) de l'élément de retenue d'appareil (3b) à une face arrière de bloc d'accumulateur (Rs).

12. Système d'accouplement de bloc d'accumulateur selon l'une quelconque des revendications 1 à 11, **caractérisé en outre en ce qu'**il est conçu pour l'accouplement électrique du bloc d'accumulateur (23) au choix au dispositif à dos (24) ou à l'appareil électrique à main (25), et présente à cet effet :
- une interface d'accouplement électrique (16) au niveau du bloc d'accumulateur (23),
- une ligne de raccordement électrique (17) pourvue d'un corps de fiche de raccordement (18) côté extrémité qui peut être accouplé de manière amovible à l'interface d'accouplement électrique (16), et
- un mécanisme de fixation de fiche (19) qui permet de fixer le corps de fiche de raccordement (18) de manière amovible au dispositif à dos (24).

13. Système d'accouplement de bloc d'accumulateur selon la revendication 12, **caractérisé en outre en ce que**
- le bloc d'accumulateur (23) peut être accouplé mécaniquement par un mouvement d'amarrage et un mouvement de pivotement consécutif d'une position d'amarrage à dos (RAs) à une position de retenue à dos (RFs) avec le dispositif à dos (24), et lorsque le corps de fiche de raccordement (18) est fixé au dispositif à dos (24), l'accouplement électrique de l'interface d'accouplement électrique (16) au corps de fiche de raccordement (18) a lieu par pivotement du bloc d'accumulateur (23) amarré au dispositif à dos (24) dans la position de retenue à dos, et/ou
- l'appareil électrique (25) présente une interface d'appareil électrique (29) pouvant être accouplée à l'interface d'accouplement électrique (16) au niveau du bloc d'accumulateur (23), et le bloc d'accumulateur (23) peut être accouplé mécaniquement par un mouvement d'amarrage et un mouvement de pivotement consécutif d'une position d'amarrage d'appareil (GAs) dans une position de retenue d'appareil (GFs) à l'appareil électrique (25), et l'accouplement de l'interface d'accouplement électrique à l'interface d'appareil électrique a lieu par le pivotement du bloc d'accumulateur (23) amarré à l'appareil électrique (25) dans la position de retenue d'appareil,
- dans lequel un angle de pivotement de portage à dos (RW) du bloc d'accumulateur (23) entre la position d'amarrage de portage à dos (RAs) et la position de retenue de portage à dos (RFs) est au moins 20°, et/ou un angle de pivotement d'appareil (GW) du bloc d'accumulateur (23) entre la position d'amarrage d'appareil (GAs) et la position de retenue d'appareil (GFs) est au moins 20°.

14. Système d'accouplement de bloc d'accumulateur selon la revendication 12 ou 13, **caractérisé en outre en ce que** le mécanisme de fixation de fiche (19) comprend une connexion par enclenchement amovible (19a) du corps de fiche de raccordement (18) à une base de transport (20) du dispositif à dos (24).

15. Système d'accouplement de bloc d'accumulateur selon l'une quelconque des revendications 12 à 14, **caractérisé en outre en ce que** l'interface d'accouplement électrique (16) est disposée dans une zone de face arrière supérieure (Ro) du bloc d'accumulateur (23).
